# EUROPEAN PATENT SPECIFICATION

(11) **EP 0 871 277 B1**
(45) Date of publication and mention of the grant of the patent: **14.01.2004**
(21) Application number: 98830083.6
(22) Date of filing: 19.02.1998
(51) Int. Cl.: H02K 1/27

(54) **Modular electric motor**
Modularer elektrischer Motor
Moteur électrique modulaire

(30) Priority: 27.03.1997 IT RE970022
(43) Date of publication of application: 14.10.1998
(73) Proprietor: Motor Power Company S.r.l., 42024 Castelnovo Sotto (RE) (IT)
(72) Inventor: Felici, Lorenzo, 42021 Bibbiano (RE) (IT)
(74) Representative: Lanzoni, Luciano

(56) References cited:
- EP-A- 0 043 981
- EP-A- 0 532 769
- DE-U- 8 907 902
- FR-A- 2 499 326
- US-A- 5 111 094
- US-A- 5 162 685
- PATENT ABSTRACTS OF JAPAN vol. 11, no. 182 (E-515) [2629] , 11 June 1987 & JP 62 012365 A (IKEDA DENKI K.K.), 21 January 1987,
- PATENT ABSTRACTS OF JAPAN vol. 96, no. 5, 31 May 1996 & JP 08 023664 A (AISIN AW CO LTD), 23 January 1996,
- PATENT ABSTRACTS OF JAPAN vol. 13, no. 325 (E-792) [3673] , 21 July 1989 & JP 01 091648 A (COPAL CO LTD), 11 April 1989,
- PATENT ABSTRACTS OF JAPAN vol. 014, no. 481 (M-1037) 19 October 1990 & JP 02 194 209 A (MATSUSHITA ELECTRIC WORKS LTD) 31 July 1990

## Description

The present invention relates to an electric motor of the brushless type, in which the rotor consists of a plurality of magnetic poles obtained with permanent magnets.

In the sector, electric motors with a permanent-magnet rotor, operating in synchronism with a rotating magnetic field created by a continuous electric current flowing through the stator windings, are known.

In these known motors, the current pulses of the stator are suitably controlled by an electronic regulator, called a chopper, which both distributes this current on the various arms of the stator winding and regulates the strength and pulse duration thereof.

The electronic regulator of the stator current (or chopper) is in turn driven by a rotor phase reader, called an encoder or resolver, which supplies information on the exact polar position of the rotor with respect to the stator.

In these brushless motors (as they are called in the now internationally adopted jargon), the rotor is of the permanent-magnet type; in the known art it consists of an assembled pack of cut laminations which have a circular external shape suitably lightened by holes so as to reduce the polar inertia thereof and limit the flow of induced currents and consequent heat losses due to the known Joule effect.

Permanent magnets, for example in the form of magnetized bars with a high flux density, generally consisting of ferrous alloys with rare earths (neodymium, boron, samarium, cobalt, etc.), are arranged in suitable peripheral seats formed on the external surface of the known laminations.

These magnetized bars are housed (and bonded) in special seats of the rotor lamination pack, the number of which is always a multiple of two, depending on the planned number of poles for the rotor.

These known motors with a rotor consisting of a pack of laminations have, however, some contructional difficulties resulting in the tendancy to use them in special areas where, for example, a low polar inertia, high angular acceleration or a high specific power performance is required.

The main limitation of motors with a rotor consisting of a pack of cut laminations consists in the dimensional rigidity, in the sense that it is not possible to vary easily the constructional methods applied to the rotor, both as regards the length of the rotor pack and number of poles, and as regards the polar inertia moment, since all these factors depend on the cutting shape of the laminations.

Essentially, therefore, for the same air-gap diameter, the design of the various rotor sizes requires different assembly of the magnetic components for each size; also the design of a motor with a different number of poles does not allow the same rotor laminations to be used.

In fact, the production of the known motors with a rotor consisting of pack of laminations is not easy since, for the entire construction cycle, specific mechanical and magnetic processing operations relating to the product must be repeated for each individual size.

Finally also, motors with a rotor consisting of a pack of laminations may be subject, during operation under load, to vibrations should assembly of the various laminations and the magnets not be sufficiently compact and reliable.

From JP-A-62012365 is known a PM type stepping motor with a rotor which comprises two coaxially arranged identical modular elements. Each modular element has a substantially toroidal shape obtained by rotating a geometrical shape in the form of an "I".

Therefore rotors obtained with identical modular elements are known from FR-A-2499326, EP-A-0532769, DE-U-8907902.

From EP-A-0043981 is known o rotor with a polyedric surface to support magnetised bars and from JP-A-8023664 is shown a rotor presenting magnetized bars separated by spacer teeth.

The object of the present invention is to overcome the abovementioned drawbacks and limitations by providing a synchronous, permanent-magnet, brushless electric motor which is able to provide a high specific power output, with a high angular acceleration, and which is both easy to assemble and can benefit from the advantages associated with the use of modular components.

These objects are achieved with a direct-current electric motor as claimed in claim 1. Each element of substantially toroidal shape may be obtained as a solid of rotation of a geometrical shape substantially in the form of an "I" and provided on the outer part, at least in the region of similar poles, with an enlarged head which acts as a track for supporting magnetized element-like bars.

The invention will emerge more clearly from the description of two examples of embodiment, illustrated hereinbelow with the aid of three illustrative plates, in which:

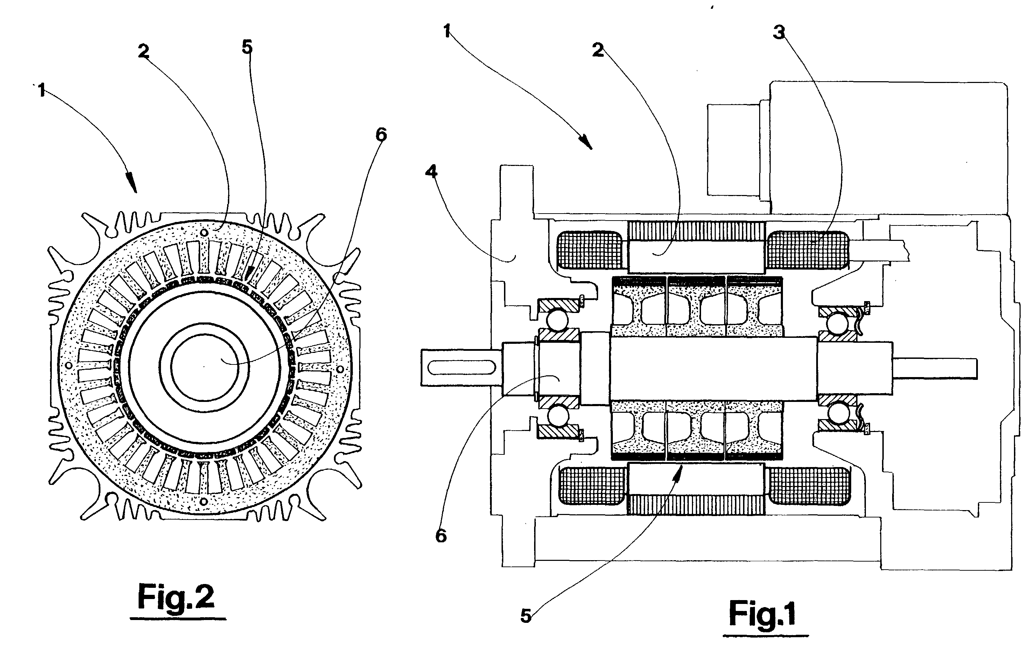

Fig. 1 shows a sectional view, along a vertical plane passing through the motor axis, of a motor constructed in accordance with the invention;
Fig. 2 shows a sectional view of this motor along a plane perpendicular to the axis;
Fig. 3 shows a detail of this Fig. 2, consisting of a quadrant thereof;
Fig. 4 shows a detail of the rotor alone, on which three modules constructed in accordance with the invention are mounted;
Figs. 5 and 6 show, respectively, a front view and an axially sectioned view of one of these modules partially devoid of the magnetized bars; while Fig. 7 shows a possible constructional variant of the module, shown in detail in Fig. 8;
Fig. 9 shows in detail a magnetized bar;
Fig. 10 shows a cross-sectional view of a motor, the rotor of which is constructed according to a second embodiment;
Fig. 11 shows a detail of a quadrant in the cross-section of the rotor constructed according to this second embodiment;
Fig. 12 shows, finally, an axially sectioned view of one of the modules forming the rotor.

With reference to these Figures, 1 denotes a direct-current brushless electric motor constructed in accordance with the invention; 2 denotes the stator of this motor, 3 the stator windings, 4 a securing flange at one end of the motor 1. 5 denotes the rotor of the motor, 6 the shaft of this rotor, 7 a rotor module which, in the example shown, is mounted as a set of three identical modules which are coaxially arranged next to one another on the shaft 6.

8 denotes a one-piece bobbin made of ferromagnetic material forming the module 7; 9 a magnetized bar with a high density of permanent magnet flux.

The bobbin 8 consists of a central bush 10 intended to engage mechanically on the shaft 6 in accordance with a known technology; a core 11 of smaller thickness, and an enlarged head 12 intended to support on its outer peripheral part a plurality of bars 9 which are uniformly arranged on the support track 13 and fastened to the same by means of bonding.

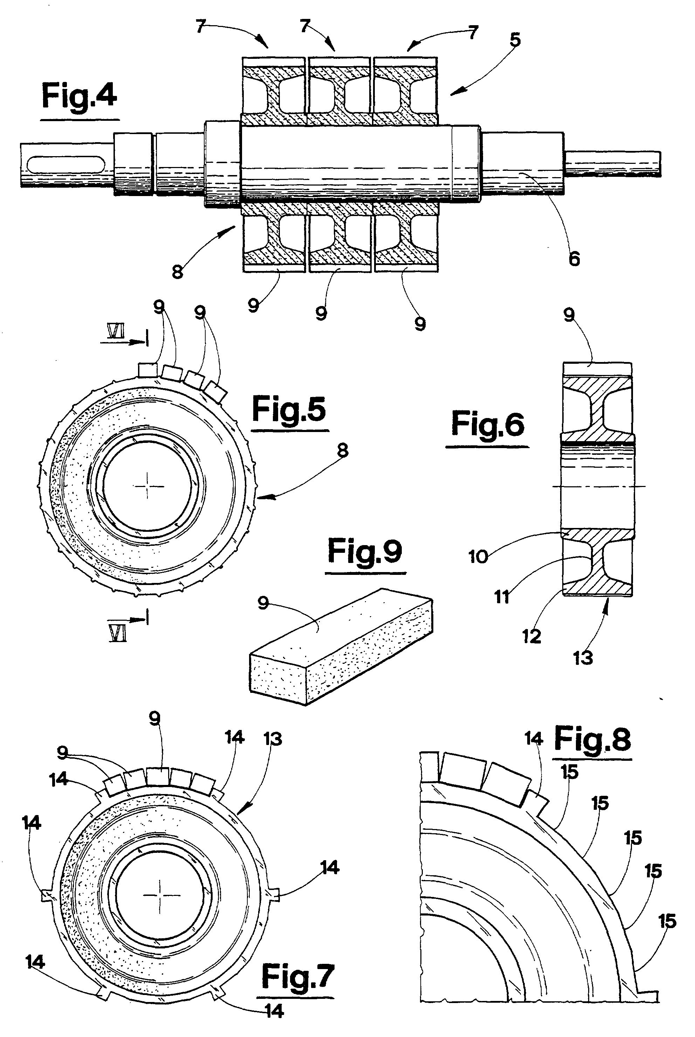

A possible ccnstructional variant of the bobbin 8 is shown in Fig. 7 where spacer teeth 14 are mounted at regular intervals on the circumferential track 13, the number of said teeth being equal to the number of poles of the rotor.

15 denotes a part of the track 13, consisting of a rectangular shaped segment which acts as a support base for a bar 9; it is envisaged that the track 13 is formed by a plurality of these flat segments 15 arranged next to one another along their greater side and suitably angled so as to form a regular polyhedric surface.

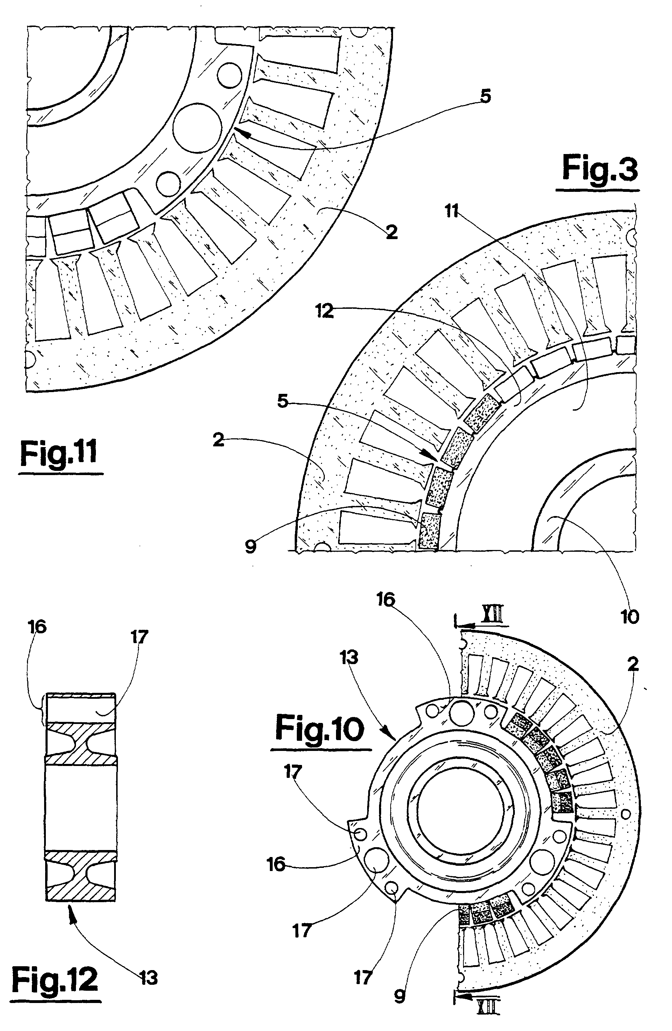

Fig. 10 shows a cross-sectional view, along a plane perpendicular to the motor, of a second example of embodiment of the invention applied to a six-pole motor and better illustrated in Fig. 11 which shows in enlarged detail a quadrant of this cross-section.

In these figures, 16 denotes a pole shoe of the rotor, formed in the one-piece body of each bobbin 8 by means of raising of the thickness of the enlarged head 12; 17 indicates suitable weight-reducing apertures in the pole shoe 16, consisting of a plurality of cylindrical holes.

In said rotor it is envisaged that the pole shoes 16 of each module 7 alternate, in the circumferential direction, with similar magnetic polarities formed by the application of magnetized bars 9 onto a support track 13 formed on the enlarged head 12 of each bobbin 8 forming the module 7.

Fig. 12 shows an axially sectioned view of a bobbin 8 constructed in accordance with the example of embodiment. Illustrated in the examples of embodiment with the use of three modules 7 for formation of the rotor, the invention may be realized by adopting a plurality of these modules, such as to obtain motors with a modularly variable length.

It is envisaged, in a constructional variant which concerns both the examples of embodiment illustrated above, that the track 13 for mounting of the magnetized bars 9 should have a curved shape with a constant radius of curvature, rather than a polygonal shape; in this case, the base of the magnetized bars 9 will also be preferably curved, so as to match the surface of the track 13.

## Claims

1. Direct-current electric motor of the brushless type, having a rotor (5) consisting of the sum of a plurality of identical modular elements (7) which are coaxially arranged next to one another; each modular element (7) being made of ferromagnetic material and having a substantially toroidal shape; each modular element (7) being provided, on the outer part, with an enlarged head (12); **characterized in that** the enlarged head (12) acts, on its outer peripheral part, as a track (13) supporting magnetized element-like bars (9); each modular element (7) having a plurality of pole shoes (16) alternating with the support track (13) in the circumferential direction on the periphery of the enlarged head (12); each pole shoe (16) being made of ferromagnetic material and being formed by means of raising of the thickness of the enlarged head (12).

2. Direct-current electric motor according to Claim 1, **characterized in that** each modular element (7) is obtained as a solid of rotation of a geometrical shape substantially in the form of an "I".

3. Direct-current electric motor according to Claim 1 **characterized in that** the track (13) supporting magnetized element-like bars (9) consists of a plurality of flat rectangular surfaces (15) arranged next to one another along their greater side and suitably angled so as to form a regular polyhedric surface.

4. Direct-current electric motor according to Claim 1, **characterized in that** the supporting track (13) is formed by a surface curved in the manner of a cylindrical claw.

5. Direct-current electric motor according to Claim 1, **characterized in that** at least one aperture or hole (17) is present on the pole shoes (16) circumferentialy present on the periphery of each modular element (7).

6. Direct-current electric motor according to Claim 1, **characterized in that** each modular element (7) is formed by a one-piece bobbin (8) made of ferromagnetic material and each pole shoe (16) is formed in said one-piece bobbin.

## Patentansprüche

1. Bürstenloser Gleichstrom-Elektromotor mit einem Rotor (5), bestehend aus der Summe einer Anzahl von gleichen Bauteilen (7), welche koaxial eins nach dem anderen angeordnet sind; wobei jedes Bauteil (7) aus einem ferromagnetischen Material hergestellt ist und eine im wesentlichen ringförmige Ausbildung aufweist; wobei jedes Bauteil (7) aussen mit einem erweiterten Kopf (12) versehen ist; **dadurch gekennzeichnet, dass** der erweiterte Kopf (12) an seinem umlaufenden äusseren Teil als eine Spur (13) wirkt, welche magnetisierte, elementartige Stäbe (9) trägt; wobei jedes Bauteil (7) eine Anzahl von Polschuhen (16) aufweist, die sich in Umfangsrichtung an dem Umlauf des erweiterten Kopfes (12) mit der Trägerspur (13) abwechseln; wobei jeder Polschuh (16) aus ferromagnetischem Material hergestellt und mit Hilfe einer Aufhöhung der Dicke des erweiterten Kopfes (12) gebildet ist.

2. Gleichstrom-Elektromotor nach Patentanspruch 1, **dadurch gekennzeichnet, dass** jedes Bauteil (7) als ein Rotationskörper von einer geometrischen Ausbildung im wesentlichen in Form eines "I" erhalten ist.

3. Gleichstrom-Elektromotor nach Patentanspruch 1, **dadurch gekennzeichnet, dass** die die elementartigen Stäbe (9) tragende Spur (13) aus einer Anzahl von flachen, rechteckigen Flächen (15) besteht, angeordnet eine neben der anderen entlang ihrer grösseren Seite und geeignet angewinkelt, so dass sie eine gleichmässige polyedrische Fläche bilden.

4. Gleichstrom-Elektromotor nach Patentanspruch 1, **dadurch gekennzeichnet, dass** die Trägerspur (13) aus einer Oberfläche gebildet wird, die in der Art einer zylindrischen Klaue gebogen ist.

5. Gleichstrom-Elektromotor nach Patentanspruch 1, **dadurch gekennzeichnet, dass** wenigstens eine Öffnung oder Bohrung (17) an den Polschuhen (16) vorhanden ist, die sich in Umfangsrichtung am Umlauf eines jeden Bauteils (7) befindet.

6. Gleichstrom-Elektromotor nach Patentanspruch 1, **dadurch gekennzeichnet, dass** jedes Bauteil (7) aus einer einteiligen Spule (8) aus ferromagnetischem Material besteht und jeder Polschuh (16) aus der genannten einteiligen Spule gebildet wird.

## Revendications

1. Moteur électrique à courant continu du type sans brosses, ayant un rotor (5) consistant en la somme d'une pluralité d'éléments modulaires (7) identiques coaxialement disposés l'un contre l'autre; chaque élément modulaire (7) étant réalisé en un matériau ferromagnétique et ayant une forme substantiellement toroidale; chaque élément modulaire (7) étant pourvu, sur la partie externe, d'une tête élargie (12); **caractérisé en ce que** la tête élargie (12) agit, sur sa partie périphérique externe, comme une piste (13) supportant des barres élémentaires magnétisées (9); chaque élément modulaire (7) ayant une pluralité d'expansions polaires (16) qui s'alternent avec la piste de support (13) dans la direction circonférentielle sur la périphérie de la tête élargie (12); chaque expansion polaire (16) étant réalisée en un matériau ferromagnétique et étant formée au moyen de l'augmentation de l'épaisseur de la tête élargie (12).

2. Moteur électrique à courant continu selon la revendication 1, **caractérisé en ce que** chaque élément modulaire (7) est obtenu comme un solide de rotation de forme géométrique substantiellement en forme de I.

3. Moteur électrique à courant continu selon la revendication 1, **caractérisé en ce que** la piste (13) supportant les barres élémentaires magnétisées (9) consiste en une pluralité de surfaces plates rectangulaires (15) disposées proches l'une de l'autre le long de leur plus grand côté et opportunément orientées de manière à former une surface polyédrique régulière.

4. Moteur électrique à courant continu selon la revendication 1, **caractérisé en ce que** la piste de support (13) est formée par une surface courbe à la manière d'un ongle cylindrique.

5. Moteur électrique à courant continu selon la revendication 1, **caractérisé en ce qu'**au moins une ouverture ou orifice (17) est présente sur les expansions polaires (16) circonférentiellement présentes sur la périphérie de chaque élément modulaire (7) .

6. Moteur électrique à courant continu selon la revendication 1, **caractérisé en ce que** chaque élément modulaire (7) est formé par une bobine monobloc (8) réalisée en matériau ferromagnétique et chaque expansion polaire (16) est formée dans ladite bobine monobloc.
